Europäisches Patentamt

European Patent Office

Office européen des brevets

(11) Numéro de publication : **0 371 851 B1**

(12)

# FASCICULE DE BREVET EUROPEEN

(45) Date de publication du fascicule du brevet :
**15.04.92 Bulletin 92/16**

(51) Int. Cl.$^5$ : **B62D 7/14, B62D 5/04**

(21) Numéro de dépôt : **89403205.1**

(22) Date de dépôt : **21.11.89**

(54) **Dispositif auxiliaire du traitement des défaillances d'un système d'actionnement d'un vérin électrique linéaire.**

(30) Priorité : **29.11.88 FR 8815555**

(43) Date de publication de la demande :
**06.06.90 Bulletin 90/23**

(45) Mention de la délivrance du brevet :
**15.04.92 Bulletin 92/16**

(84) Etats contractants désignés :
**DE ES GB IT SE**

(56) Documents cités :
**WO-A-85/04631**
**DE-A- 3 510 536**
**US-A- 4 741 409**
**PATENT ABSTRACTS OF JAPAN vol. 9, no.
168 (M-396)(1891) 13 juillet 1985, & JP-A-60
42161 (MAZDA K.K.) 06 mars 1985,
PATENT ABSTRACTS OF JAPAN vol. 10, no.
218 (M-503)(2274) 30 juillet 1989, & JP-A-61
57465 (NISSAN MOTOR CO LTD) 24 mars 1986,
PATENT ABSTRACTS OF JAPAN vol. 10, no.
249 (M-511)(2305) 27 août 1986, & JP-A-61
77573 (MAZDA MOTOR CORP) 21 avril 1986,**

(73) Titulaire : **REGIE NATIONALE DES USINES
RENAULT
Boîte postale 103 8-10 avenue Emile Zola
F-92109 Boulogne-Billancourt (FR)**

(72) Inventeur : **Herent, Gérard
8, Avenue du Bois
I-92190 Meudon (FR)**
Inventeur : **Mahe, Michel
34, Boulevard de la Libération
F-92370 Chaville (FR)**
Inventeur : **Romagny, Alex
1, Avenue des Prés
F-78170 La Celle Saint-Cloud (FR)**

(74) Mandataire : **Ernst-Schonberg, Michel et al
REGIE NATIONALE DES USINES RENAULT (S.
0267) 8 & 10, avenue Emile Zola
F-92109 Boulogne Billancourt Cédex (FR)**

## Description

La présente invention se rapporte à un dispositif auxiliaire du traitement des défaillances d'un système d'actionnement d'un vérin électrique linéaire qui s'applique notamment à la commande du braquage des roues arrière d'un véhicule automobile à quatre roues directrices.

On connaît des dispositifs d'actionnement d'un vérin électrique linéaire qui permettent de commander un déplacement longitudinal. En cas de défaillance, il n'y a pas d'organe prévu pour assurer le fonctionnement en mode dégradé. Par ailleurs, certains dispositifs utilisent une redondance impliquant un coût élevé.

On peut envisager un rappel au zéro de la position du vérin électrique par des systèmes à ressort, mais cela entraîne un encombrement important, un surdimensionnement du vérin électrique, un bon rendement inverse et le rappel au zéro n'est pas contrôlé.

Le but de la présente invention est de proposer un dispositif auxiliaire du traitement des défaillances d'un système d'actionnement d'un vérin électrique linéaire qui s'applique notamment à la commande du braquage des roues arrière d'un véhicule automobile à quatre roues directrices, et qui garantisse une utilisation rationnelle et économique de l'énergie nécessaire ainsi qu'un faible calibrage des composants tout en assurant un contrôle du rappel au zéro de la position du vérin électrique linéaire et tout en étant suffisamment compact.

Selon un mode de réalisation de l'invention, le dispositif auxiliaire du traitement des défaillances d'un système d'actionnement d'un vérin électrique linéaire comporte un moteur auxiliaire qui coopère avec un frein de manière que, en cas de défaillance dudit dispositif d'actionnement, le moteur auxiliaire ramène ledit vérin à sa position zéro et que le frein maintienne cette position à l'encontre de toute action mécanique.

Le dispositif auxiliaire du traitement des défaillances d'un vérin électrique linéaire selon l'invention présente ainsi l'avantage d'assurer un contrôle du rappel au zéro de la position du vérin électrique, tout en étant peu encombrant et d'un coût relativement faible.

D'autres caractéristiques et avantages de la présente invention ressortiront de la description qui suit le mode de réalisation donné à titre d'exemple en référence aux dessins annexés sur lesquels :
– La figure 1 est un schéma du dispositif du traitement des défaillances selon l'invention.
– La figure 2 est un schéma d'un autre mode de réalisation du dispositif de l'invention,
– La figure 3 est un schéma d'un autre mode de réalisation du dispositif de l'invention.

Le dispositif auxiliaire du traitement des défaillances d'un système d'actionnement d'un vérin électrique linéaire selon l'invention comporte des moyens d'entraînement auxiliaires, qui coopèrent avec des moyens de freinage, de façon que, en cas de défaillance dudit système d'actionnement, les moyens d'entraînement auxiliaires ramènent le vérin à sa position zéro et que les moyens de freinage maintiennent cette position à l'encontre de toute action mécanique.

Ce dispositif peut, notamment, s'appliquer au système de braquage des roues arrière d'un véhicule et il a pour fonction le rappel à l'alignement des roues au zéro et l'immobilisation ou le maintien au zéro.

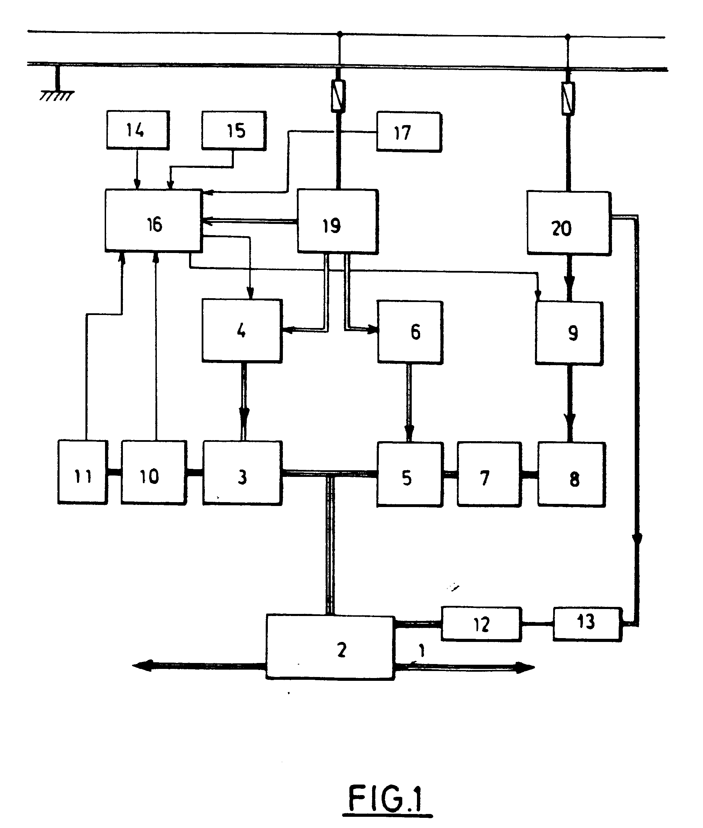

Dans un premier mode de réalisation de l'invention, représenté sur la figure 1, le système d'actionnement comporte un moteur principal 3 et les moyens d'entraînement auxiliaires consistent en un petit moteur auxiliaire 8 qui coopère avec des moyens de freinage. Ces moyens de freinage consistent en un réducteur irréversible 7 qui est associé à un embrayage 5 à manque de courant. Le réducteur irréversible 7 est intégré au moteur auxiliaire 8 de manière à avoir un motoréducteur auxiliaire à faible encombrement. L'embrayage 5 à manque de courant permet d'isoler en temps normal le moteur auxiliaire 8 et le réducteur irréversible 7.

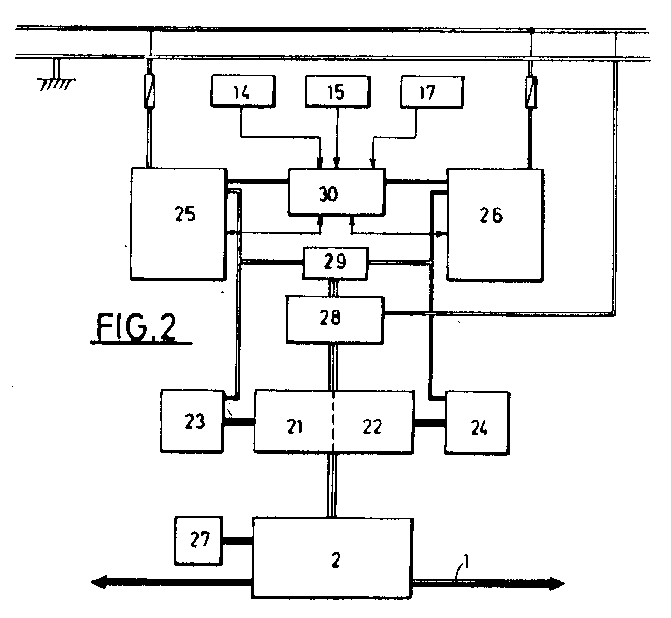

Dans un deuxième mode de réalisation, représenté sur la figure 2, l'entraînement électrique principal du système d'actionnement consiste en deux moteurs 21 et 22 identiques qui sont montés en parallèle, et qui fournissent chacun la moitié du couple demandé. Ces deux moteurs 21 et 22 sont agencés de manière que, en cas de défaillance d'un des deux moteurs, le moteur valide réalise la fonction des moyens d'entraînement auxiliaires en tant que moteur auxiliaire. Dans ce cas, le moteur valide coopère alors avec des moyens de freinage, qui consistent en un frein 28 à manque de courant.

Les deux moteurs 21 et 22, qui sont montés en parallèle, sont en fait un seul moteur du type sans balai, avec deux groupes séparés de bobinage.

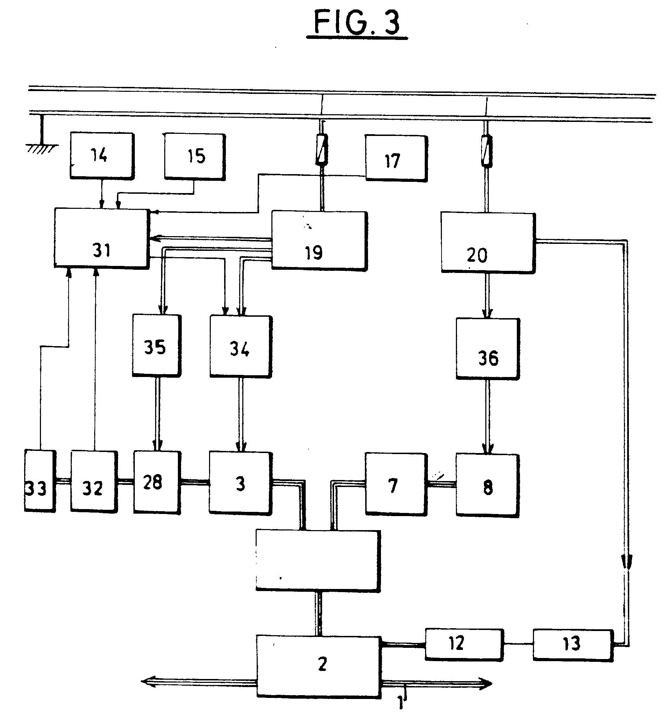

Selon un troisième mode de réalisation de l'invention, représenté sur la figure 3, les moyens d'entraînement auxiliaires consistent en un petit moteur auxiliaire 8, qui coopère avec des moyens de freinage. Ces moyens de freinage comportent un réducteur irréversible 7, qui est monté en sortie dudit moteur auxiliaire 8, et un frein 28 à manque de courant. Ce frein 28 à manque de courant est monté sur l'une des sorties du moteur principal 3 du système d'actionnement. Le réducteur irréversible 7 et le frein 28 à manque de courant sont les entrées d'un train épicycloïdal.

Le réducteur irréversible 7 est intégré au moteur auxiliaire 8 pour avoir un motoréducteur auxiliaire à faible encombrement. Le réducteur irréversible 7 est du type à vis sans fin et sa couronne est solidaire de la couronne intérieure du train épicycloïdal. Le planétaire du train épicycloïdal est solidaire du moteur principal 3 avec son frein 28 à manque de courant. La sortie du mouvement du train épicycloïdal se fait par le porte-satellite.

Les différentes figures représentent le dispositif de l'invention qui s'appliquent à un ensemble mécanique référencé 2 dans son ensemble, actionnant les biellettes droite et gauche des roues du véhicule, qui sont référencées 1 dans leur ensemble. Sur les figures, les liaisons représentées par trois lignes parallèles représentent des liaisons mécaniques; les liaisons représentées par deux lignes parallèles représentent des liaisons électriques de puissance, et les liaisons représentées par une seule ligne sont des liens d'information.

Le premier mode de réalisation représenté sur la figure 1 comporte un système de commande du moteur principal droit et un système de commande du moteur auxiliaire 8. Le système de commande du moteur principal 3 consiste en microprocesseur 16 qui reçoit les paramètres de l'angle 14 du volant de direction et de la vitesse 15 du véhicule. Il reçoit également des informations d'un codeur incrémenteur 10 et d'un top tour 11 qui donnent la position du moteur principal 3. Cela permet d'asservir le vérin électrique en position par l'intermédiaire d'une électronique de commande 4 dudit moteur principal 3. Le microprocesseur 16 assure la commande 6 de l'embrayage 5 à manque de courant. Le système de commande 9 du moteur auxiliaire 8 agit par l'arrivée d'un signal défaut 17 venant du microprocesseur 16. Un détecteur de zéro 12 du sens de la position par rapport à ce zéro du vérin coopère avec les informations données par le codeur incrémenteur 10 et par le top tour 11. Ce système donne la position du moteur principal 3 par l'intermédiaire du codeur incrémenteur 10 et autorise le fonctionnement du système de commande du moteur auxiliaire 8. Un ensemble de distribution des coupures de puissance 19 et un ensemble de distribution des coupures de puissance auxiliaire 20 assurent l'alimentation de l'ensemble par l'intermédiaire d'une protection par fusible.

Le deuxième mode de réalisation de l'invention représenté sur la figure 2 a un système de commande identique pour chacun des moteurs 21 et 22. Ce système de commande, qui consiste en une électronique de commande 25 pour le moteur 21 et une électronique de commande 26 pour le moteur 22, coopère avec un microprocesseur 30. Ce microprocesseur 30 reçoit des paramètres de l'angle du volant 14 de direction et de la vitesse 15 du véhicule. Chacune des électroniques de commande 25 et 26 assure, en parallèle, l'asservissement en position du vérin. L'arrivée d'un signal défaut 17, venant du microprocesseur 30 ou d'un des systèmes de commande, autorise, par l'intermédiaire d'un codeur incrémenteur 23 ou 24 correspondant à l'autre système de commande, le fonctionnement de celui-ci pour le rappel à la position zéro. Chacun des codeurs incrémenteurs 23 et 24 coopère avec un top tour 29. De plus, un détecteur de zéro 27 est monté sur l'ensemble mécanique 2.

Le troisième mode de réalisation représenté sur la figure 3 comporte un système de commande du moteur principal 3, et un système de commande du moteur auxiliaire 8. Le système de commande du moteur principal 3 consiste en un microprocesseur 31, qui reçoit des paramètres de l'angle 14 du volant de direction et de la vitesse 15 du véhicule. Il reçoit également des informations donnant la position du moteur principal 3 de manière à asservir le vérin électrique en position par l'intermédiaire d'une électronique de commande dudit moteur principal 3. Le microprocesseur 31 assure la commande 35 du frein 28. Le système de commande 36 du moteur auxiliaire 8 agit par l'arrivée d'un signal défaut 17 venant du microprocesseur 31. Un détecteur de sens de la position par rapport au zéro du vérin, c'est-à-dire un détecteur de zéro 12 avec son électronique 13, coopère avec les informations données par le codeur incrémenteur 32 et le top tour 33, qui donnent la position du moteur principal 33 et autorisent le fonctionnement du système de commande 36 du moteur auxiliaire 8.

**Revendications**

1. Dispositif auxiliaire du traitement des défaillances d'un système d'actionnement d'un vérin électrique linéaire caractérisé en ce qu'il comporte des moyens d'entraînement auxiliaires qui coopèrent avec des moyens de freinage de manière que, en cas de défaillance dudit système d'actionnement, les moyens d'entraînement auxiliaires ramènent ledit vérin à sa position zéro et que les moyens de freinage maintiennent cette position à l'encontre de toute action mécanique.

2. Dispositif selon la revendication 1 caractérisé en ce que le système d'actionnement comporte un moteur principal (3) et les moyens d'entraînement auxiliaires consistent en un petit moteur auxiliaire (8) qui coopère avec des moyens de freinage comportant un réducteur irréversible (7) associé à un embrayage (5).

3. Dispositif selon la revendication 2 caractérisé en ce que le réducteur irréversible (7) est intégré au moteur auxiliaire (8) pour avoir un motoréducteur auxiliaire à faible encombrement.

4. Dispositif selon l'une des revendications 2 ou 3 caractérisé en ce que l'embrayage (5) est à manque de courant de manière à isoler en temps normal le moteur auxiliaire (8) et le réducteur irréversible (7).

5. Dispositif selon la revendication 1 caractérisé en ce que l'entraînement électrique principal du système d'actionnement consiste en deux moteurs (21) et (22) montés en parallèle et fournissant chacun la moitié du couple demandé de manière que, en cas de défaillance, le moteur valide réalise la fonction des moyens d'entraînement auxiliaires en tant que moteur auxiliaire qui coopère avec des moyens de freinage consistant en un frein.

6. Dispositif selon la revendication 5 caractérisé en ce que les deux moteurs (21) et (22), montés en parallèle, sont un seul moteur du type sans balai avec deux groupes séparés de bobinages.

7. Dispositif selon l'une des deux revendications 5 ou 6 caractérisé en ce que le frein est du type frein (28) à manque de courant.

8. Dispositif selon la revendication 1 caractérisé en ce que les moyens d'entraînement auxiliaires consistent en un petit moteur auxiliaire (8) qui coopère avec des moyens de freinage comportant un réducteur irréversible (7) monté en sortie dudit moteur auxiliaire (8) et un frein monté sur l'une des sorties du moteur principal (3) du système d'actionnement, lesdits réducteur (7) et frein étant les entrées d'un train épicycloïdal.

9. Dispositif selon la revendication 8 caractérisé en ce que le frein est du type frein (28) à manque de courant.

10. Dispositif selon la revendication 8 caractérisé en ce que le réducteur irréversible (7) est intégré au moteur auxiliaire (8) pour avoir un motoréducteur auxiliaire à faible encombrement.

11. Dispositif selon la revendication 8 caractérisé en ce que le réducteur irréversible (7) est du type à vis sans fin dont la couronne est solidaire de la couronne intérieure du train épicycloïdal qui a son planétaire solidaire du moteur principal (3) avec son frein (28), la sortie du mouvement se faisant par le porte-satellite.

12. Dispositif selon l'invention 4 caractérisé en ce qu'il comporte un système de commande du moteur principal (3) et un système de commande du moteur auxiliaire (8) ; le système de commande du moteur principal (3) consistant en un microprocesseur (16) qui reçoit des paramètres de l'angle (14) du volant de direction et de la vitesse (15) du véhicule et des informations (10, 11) donnant la position du moteur principal (3) de manière à asservir le vérin électrique en position par l'intermédiaire d'une électronique de commande (4) dudit moteur principal (3), le microprocesseur (16) assurant la commande (6) de l'embrayage (5) ; le système de commande (9) du moteur auxiliaire (8) agissant par l'arrivée d'un signal défaut (17) venant du microprocesseur (16) ; un détecteur (12) de sens de la position par rapport au zéro du vérin coopérant avec les informations (10, 11) donnant la position du moteur principal (3) par l'intermédiaire d'un codeur incrémenteur (10) et autorisant le fonctionnement du système de commande du moteur auxiliaire (8).

13. Dispositif selon la revendication 7 caractérisé en ce que chacun des moteurs (21, 22) a un système de commande identique qui coopère avec un microprocesseur (30) qui reçoit des paramètres de l'ange du volant (14) de direction et de la vitesse (15) du véhicule ; chacun desdits systèmes de commande assure en parallèle l'asservissement en position du vérin ; l'arrivée d'un signal défaut (17) venant du microprocesseur (30) ou d'un des systèmes de commande autorise, par l'intermédiaire du codeur incrémenteur (23, 24) correspondant à l'autre système de commande, le fonctionnement de celui-ci pour le rappel à la position zéro.

14. Dispositif selon la revendication 9 caractérisé en ce qu'il comporte un système de commande du moteur principal (3) et un système de commande du moteur auxiliaire (8), le système de commande du moteur principal (3) consistant en un microprocesseur (31) qui reçoit des paramètres de l'angle (14) du volant de direction et de la vitesse (15) du véhicule et des informations donnant la position du moteur principal (3) de manière à asservir le vérin électrique en position par l'intermédiaire d'une électronique de commande (34) dudit moteur principal (3), le microprocesseur (31) assurant la commande (35) du frein (28) ; le système de commande (36) du moteur auxiliaire (8) agissant par l'arrivée d'un signal défaut (17) venant du microprocesseur (31) ; un détecteur de sens de la position par rapport au zéro du vérin coopérant avec les informations (33, 32) donnant la position du moteur principal (3) par l'intermédiaire d'un codeur incrémenteur (32) et autorisant le fonctionnement du système de commande (36) du moteur auxiliaire (8).

**Patentansprüche**

1. Hilfseinrichtung zum Einsatz bei Ausfall eines Antriebssystems einer elektrischen linearen Stellvorrichtung, dadurch gekennzeichnet, daß sie einen Hilfsantrieb aufweist, der mit einer Bremsanordnung dergestalt zusammenwirkt, daß im Falle eines Ausfalls des Antriebssystems der Hilfsantrieb die Stellvorrichtung in ihre Null-Stellung zurückführt und daß die Bremsanordnung für die Beibehaltung dieser Stellung gegen jegliche mechanische Einwirkung sorgt.

2. Einrichtung nach Anspruch 1, dadurch gekennzeichnet, daß das Antriebssystem einen Hauptmotor (3) aufweist und daß der Hilfsantrieb aus einem kleinen Hilfsmotor (8) besteht, der mit der Bremsanordnung zusammenwirkt und der ein irreversibles Getriebe (7) aufweist, das einer Kupplung (5) zugeordnet ist.

3. Einrichtung nach Anspruch 2, dadurch gekennzeichnet, daß das irreversible Getriebe (7) in den Hilfsmotor (8) integriert ist, um ein zusätzliches Motor-Getriebe geringer Abmessungen zu erhalten.

4. Einrichtung nach einem der Ansprüche 2 oder 3, dadurch gekennzeichnet, daß die Kupplung (5) eine Stromausfallkupplung ist, die beinormaler Betriebsweise den Hilfsmotor (8) und das irreversible Getriebe (7) isoliert.

5. Einrichtung nach Anspruch 1, dadurch gekennzeichnet, daß der elektrische Hauptantrieb des Antriebssystems aus zwei parallel geschalteten Motoren (21 und 22) besteht, deren jeder die Hälfte des erforderlichen Drehmoments dergestalt liefert, daß im Falle eines Ausfalls der verbleibende Motor die Funktion des Hilfsantriebes und damit des Hilfsmotors übernimmt, der mit der aus einer Bremse bestehenden Bremsanordnung zusammenwirkt.

6. Einrichtung nach Anspruch 5, dadurch gekennzeichnet, daß die beiden parallel geschalteten Motoren (21 und 22) aus einem einzigen Motor ohne Schleifkontakte aber mit zwei getrennten Wicklungen besteht.

7. Einrichtung nach einem der Ansprüche 5 oder 6, dadurch gekennzeichnet, daß die Bremsanordnung eine StromausfallBremse (28) ist.

8. Einrichtung nach Anspruch 1, dadurch gekennzeichnet, daß der Hilfsantrieb aus einem kleinen Hilfsmotor (8) besteht, der mit einer Bremsanordnung zusammenwirkt, welche ein irreversibles Getriebe (7) aufweist, das am Ausgang des Hilfsmotors (8) angeordnet ist sowie eine Bremse aufweist, die an einem der Ausgänge des Hauptmotors (3) des Antriebssystems angeordnet ist, wobei das Getriebe (7) und die Bremse die Eingänge eines Planetenradsatzes sind.

9. Einrichtung nach Anspruch 8, dadurch gekennzeichnet, daß die Bremsanordnung eine Stromausfall-Bremse (28) ist.

10. Einrichtung nach Anspruch 8, dadurch gekennzeichnet, daß das irreversible Getriebe (7) in den Hilfsmotor (8) integriert ist, um ein zusätzliches Motor-Getriebe geringer Abmessungen zu erhalten.

11. Einrichtung nach Anspruch 8, dadurch gekennzeichnet, daß das irreversible Getriebe (7) vom Endlosschrauben-Typ ist, dessen Zahnkranz fest mit dem Hohlrad des Planetenradsatzes verbunden ist, dessen Sonnenrad fest mit dem Hauptmotor (3) und der Bremsanordnung verbunden ist, wobei der Bewegungsausgang den Planetenradträger bildet.

12. Einrichtung nach Anspruch 4, dadurch gekennzeichnet, daß sie eine Steueranordnung für den Hauptmotor (3) und eine Steueranordnung für den Hilfsmotor (8) aufweist; die Steueranordnung für den Hauptmotor (3) besteht aus einem Mikroprozessor (16), dem Signale bezüglich des Winkels (14) des Lenkrades und der Geschwindigkeit (15) des Fahrzeugs zugeführt werden sowie Informationen (10, 11) bezüglich der Stellung des Hauptmotors (3), dergestalt, daß die elektrische Stellvorrichtung eine Stellung einnehmen kann mittels einer elektronischen Steuerung (4) des Hauptmotors (3), wobei der Mikroprozessor (16) die Steuerung (6) der Kupplung (5) gewährleistet; die Steueranordnung (9) des Hilfsmotors (8) wird aktiviert nach dem Eintreffen eines vom Mikroprozessor (16) stammenden Fehlersignals (17); ein Positionsfühler (12) für die Stellung bezüglich der Null-Stellung der Stellvorrichtung wird durch die Informationen (10, 11) aktiviert, die die Stellung des Hauptmotors (3) bezüglich eines Zuwachszählers (10) darstellen und den Einsatz der Steueranordnung für den Hilfsmotor (8) ermöglichen.

13. Einrichtung nach Anspruch 7, dadurch gekennzeichnet, daß jeder Motor (21, 22) eine identische Steueranordnung aufweist, die mit einem Mikroprozessor (30) zusammenwirkt, dem Informationen (40) bezüglich des Winkels des Lenkrades und der Geschwindigkeit (15) des Fahrzeugs zugeführt werden; jede Steueranordnung gewährleistet eine parallele Steuerung der Stellung der Stellvorrichtung; das Eintreffen eines vom Mikroprozessor (30) oder einer der Steueranordnungen stammenden Fehlersignals (17) gewährleistet mittels des zur anderen Steueranordnung gehörenden Zuwachskodierers (23, 24) den Betrieb der letzteren in Richtung einer Rückführung in die Null-Stellung.

14. Einrichtung nach Anspruch 9, dadurch gekennzeichnet, daß sie eine Steueranordnung für den Hauptmotor (3) und eine Steueranordnung für den Hilfsmotor (8) aufweist, wobei die Steueranordnung für den Hauptmotor (3) aus einem Mikroprozessor (31) besteht, dem Informationen (14) bezüglich des Winkels des Lenkrades und der Geschwindigkeit (15) des Fahrzeugs zugeführt werden sowie Informationen bezüglich der Stellung des Hauptmotors (3) dergestalt, daß die elektrische Stellvorrichtung mittels einer elektronischen Steueranordnung (34) des Hauptmotors (3) eine bestimmte Stellung einnimmt, wobei der Mikroprozessor (31) die Steuerung (35) der Bremsanordnung (28) gewährleistet; die Steueranordnung (36) des Hilfsmotors (8) wird aktiviert nach dem Eintreffen eines vom Mikroprozessor (31) stammenden Fehlersignals (17); ein Fühler für die Abweichung von der Null-Stellung der Stellvorrichtung arbeitet aufgrund von Informationen (33, 32), die die Stellung des Hauptmotors (3) anzeigen mittels eines Zuwachskodierers (32) und ermöglicht den Betrieb der Steueranordnung (36) des Hilfsmotors (8).

**Claims**

1. An auxiliary device for treating the malfunctions of an actuation system of a linear electric jack, characterized in that it comprises auxiliary drive means which cooperate with braking means such that, in the event of malfunction of the actuation system, the auxiliary drive means return the jack to its zero position and the braking means maintain this position against any mechanical action.

2. A device as claimed in claim 1, characterized in that theactuation system comprises a main motor (3) and the auxiliary drive means comprise a small auxiliary motor (8) which cooperates with braking means comprising a non-reversible reducing gear (7) associated with a clutch (5).

3. A device as claimed in claim 2, characterized in that the non-reversible reducing gear (7) is integrated with the auxiliary motor (8) so as to provide a compact auxiliary motor reducing gear.

4. A device as claimed in one of claims 2 or 3, characterized in that the clutch (5) is of the current deficiency type so as to isolate, in normal time, the auxiliary motor (8) and the non-reversible reducing gear (7).

5. A device as claimed in claim 1, characterized in that the main electric drive of the actuation system comprises two motors (21, 22) which are disposed in parallel and each provide half of the torque required so that in the event of malfunction the operative motor carries out the function of the auxiliary drive means as an auxiliary motor which cooperates with braking means formed by a brake.

6. A device as claimed in claim 5, characterized in that the two motors (21) and (22) mounted in parallel are a single motor of the brushless type with two separate coil units.

7. A device as claimed in one of claims 5 or 6, characterized in that the brake is of the current deficiency brake (28) type.

8. A device as claimed in claim 1, characterized in that the auxiliary drive means comprise a small auxiliary motor (8) which cooperates with braking means comprising a non-reversible reducing gear (7) mounted at the output of the auxiliary motor (8) and a brake mounted at one of the outputs of the main motor (3) of the actuation system, the non-reversible reducing gear (7) and brake forming the inputs of a planetary gear train.

9. A device as claimed in claim 8, characterized in that the brake is of the current deficiency brake (28) type.

10. A device as claimed in claim 8, characterized in that the non-reversible reducing gear (7) is integrated with the auxiliary motor (8) so as to provide a compact auxiliary motor reducing gear.

11. A device as claimed in claim 8, characterized in that the non-reversible reducing gear (7) is of the endless screw type and its crown is rigid with the inner crown of the planetary gear train which has its planetary gear rigid with the main motor (3) with its brake (28), the output of the movement taking place via the satellite carrier.

12. A device as claimed in claim 4, characterized in that it comprises a control system for the main motor (3) and a control system for the auxiliary motor (8), the control system for the main motor (3) comprising a microprocessor (16) which receives the parameters of the angle (14) of the steering wheel and the speed (15) of the vehicle and data (10, 11) giving the position of the main motor (3) so as to control the position of the electric jack via control electronics (4) of the main motor (3), the microprocessor (16) ensuring the control (6) of the clutch (5), the control system (9) of the auxiliary motor (8) acting via the supply of a defect signal (17) from the microprocessor (16), a detector (12) of the direction of the position of the jack with respect to zero cooperating with the data (10, 11) giving the position of the main motor (3) via an incremental encoder (10) and enabling the operation of the control system of the auxiliary motor (8).

13. A device as claimed in claim 7, characterized in that each of the motors (21) and (22) has an identical control system which cooperates with a microprocessor (30) which receives parameters of the steering wheel angle (14) and the speed (15) of the vehicle, each of the control systems ensuring, in parallel, the control of the jack position, the supply of a defect signal (17) from the microprocessor (30) or from one of the control systems enabling, via an incremental encoder (23, 24) corresponding to the other control system, the operation of the latter for the return to a zero position.

14. A device as claimed in claim 8, characterized in that it comprises a control system for the main motor (3) and a control system for the auxiliary motor (8), the control system of the main motor (3) comprising a microprocessor (31) which receives parameters of the steering wheel angle (14) and the speed (15) of the vehicle and data giving the position of the main motor (3) so as to control the position of the electric jack via control electronics (34) of this main motor (3), the microprocessor (31) providing for the control (35) of the brake (28), the control system (36) of the auxiliary motor (8) acting via the supply of a defect signal (17) from the microprocessor (31), a detector of the direction of the position of the jack with respect to zero cooperating with the data (33, 32) giving the position of the main motor (3) via an incremental encoder (32) and enabling the operation of the control system (36) of the auxiliary motor (8).

FIG.1

FIG.2

# FIG. 3